# EUROPÄISCHE PATENTANMELDUNG

(11) **EP 3 553 396 A1**
(43) Veröffentlichungstag der Anmeldung: **16.10.2019**
(21) Anmeldenummer: 18166333.7
(22) Anmeldetag: 09.04.2018
(51) Int. Cl.: F24D 10/00, F24D 11/02, F24D 17/00, F24D 17/02

(54) **FERNWÄRMEABNAHMESTATION**

(71) Anmelder: JFE REBARO Fernwärmetechnik GmbH, 72184 Eutingen i.G. (DE)
(72) Erfinder: Saier, Frank, 72805 Lichtenstein (DE); Zehnder, Hans, 75249 Kieselbronn (DE); Felger, Jürgen, 72184 Eutingen (DE)
(74) Vertreter: Späth, Dieter

(57) **Zusammenfassung**

Zur Nutzung von Restwärme im Rücklauf (5) eines Fernwärmenetzes schlägt die Erfindung eine Fernwärmeabnahmestation (1) mit einem Wärmespeicher (2) und einer Wärmepumpe (3) vor, die eine Entnahme von Wärme aus dem Fernwärmenetz mit niedrigerer Temperatur als einer gebrauchten oder gewünschten Temperatur ermöglicht. Die Fernwärmeabnahmestation (1) senkt eine Rücklauftemperatur und dadurch einen Wärmeverlust im Rücklauf (5) des Fernwärmenetzes.

## Beschreibung

Die Erfindung betrifft eine Fernwärmeabnahmestation mit den Merkmalen des Oberbegriffs des Anspruchs 1.

Bekannt sind Wärmeübergabestationen zur Heizung und zur Brauchwassererwärmung in Wohn- und sonstigen Gebäuden. Solche Wärmeübergabestationen weisen üblicherweise einen Wärmetauscher auf, so dass sie hydraulisch vom Fernwärmenetz getrennt sind. Bekannt sind Durchflusssysteme ohne und Speichersysteme mit einem Wärmespeicher, der üblicherweise ein Wasserspeicher ist, dessen Wasser vom Fernwärmenetz erwärmt und dem bei Bedarf Wärme zum Heizen und/oder Erwärmen von Brauchwasser entnommen oder dessen Wasser als warmes Brauchwasser entnommen wird.

Aufgabe der Erfindung ist eine Verbesserung eines Wirkungsgrades bzw. eine Nutzung einer Niedertemperaturwärmequelle oder eines Fernwärmenetzes. Unter Niedertemperatur wird hier eine Temperatur von nicht mehr als 50°C, insbesondere nicht mehr als 35°C oder von etwa 25°C verstanden.

Diese Aufgabe wird erfindungsgemäß durch die Merkmale des Anspruchs 1 gelöst. Die erfindungsgemäße Fernwärmeabnahmestation weist einen Wärmespeicher und eine Wärmepumpe auf. Der Wärmespeicher erhält Wärme aus dem Fernwärmenetz, er ist zu einer hydraulischen Trennung vom Fernwärmenetz vorzugsweise über einen Wärmetauscher an das Fernwärmenetz angeschlossen. Die Wärmepumpe entnimmt Wärme aus dem Wärmespeicher und gibt sie mit einer anderen Temperatur als der des Fernwärmeanschlusses an einen oder mehrere Verbraucher ab. Der oder die Verbraucher sind beispielsweise eine Gebäudeheizung oder Brauchwasser. Dabei ist unter Brauchwasser Trinkwasser, Dusch-, Bade- und Waschwasser für Menschen zu verstehen, allgemein also Wasser, das in einem Wohn- oder sonstigen Gebäude warm entnommen wird.

Die Wärmepumpe ermöglicht unterschiedliche Temperaturen des Wärmespeichers und des oder der Verbraucher, insbesondere kann Wärme an die Verbraucher bei einer höheren Temperatur als der des Wärmespeichers abgegeben werden. Das ermöglicht den Betrieb der Fernwärmeabnahmestation an einem Fernwärmeanschluss, dessen Temperatur niedriger als die vom Verbraucher benötigte oder jedenfalls gewünschte Temperatur ist.

Der Wärmespeicher ermöglicht eine Entnahme von Wärme aus einem Fernwärmenetz, die zeitlich vom Verbrauch der Wärme unabhängig ist. Es lässt sich dann Wärme aus dem Fernwärmenetz entnehmen, wenn sie zur Verfügung steht und es steht auch dann Wärme für die Wärmepumpe der Fernwärmeabnahmestation zur Verfügung, wenn das Fernwärmenetz keine Wärme liefert.

Eine Ausgestaltung der Erfindung sieht ein UV Filter zur Wasseraufbereitung auf einer Sekundär- bzw. Wärmeabgabeseite der Wärmepumpe vor. Durch eine Bestrahlung des Wassers mit UV-Licht werden Keime abgetötet. Das UV Filter ist insbesondere zu einer Entkeimung bzw. Desinfektion von Brauchwasser vorgesehen, das von der Wärmepumpe erwärmt worden ist. Das UV Filter kann an oder in der Wärmepumpe, beispielsweise an einem Warmwasserauslass der Wärmepumpe oder auch in einer Warmwasserleitung oder einer Warmwasserentnahmestelle vorgesehen sein.

Eine Ausgestaltung der Erfindung sieht einen Mischer zum Zumischen von Kaltwasser vor. Kaltwasser bedeutet nicht erwärmtes Wasser bzw. Wasser, dessen Temperatur niedriger als die Temperatur des Fernwärmeanschlusses der erfindungsgemäßen Fernwärmeabnahmestation ist. Der Mischer ermöglicht einen Betrieb der Wärmepumpe mit niedriger Temperatur auch dann, wenn die Temperatur des Wärmespeichers oder des Fernwärmeanschlusses höher ist. Das ermöglicht einen Betrieb der Wärmepumpe bei einer Temperatur, für die sie ausgelegt ist und bei der sie einen hohen Wirkungsgrad aufweist. Der Mischer kann zwischen dem Fernwärmeanschluss bzw. zwischen dem Wärmetauscher und dem Wärmespeicher und/oder zwischen dem Wärmespeicher und der Wärmepumpe angeordnet sein. Andere Möglichkeiten schließt die Erfindung nicht aus.

Eine Ausgestaltung der Erfindung sieht eine elektrische Heizung für den Wärmespeicher der Fernwärmeabnahmestation vor. Die Heizung kann in oder außerhalb des Wärmespeichers angeordnet sein. Die elektrische Heizung ist zur Verwendung von Strom vorgesehen, der übrig ist und nicht anderweitig gebraucht wird.

Vorzugsweise ist die erfindungsgemäße Fernwärmeabnahmestation an einen Rücklauf des Fernwärmenetzes angeschlossen und senkt dessen Temperatur, wodurch ein Wärmeverlust des Rücklaufs verringert wird. Außerdem nutzt die Fernwärmeabnahmestation durch den Anschluss an den Rücklauf des Fernwärmenetzes Restwärme des Fernwärmenetzes, die ansonsten ungenutzt zu einer Wärmequelle des Fernwärmenetzes zurückfließt.

Eine Ausgestaltung der Erfindung sieht eine Speichertemperatur des Wärmespeichers der Fernwärmeabnahmestation von nicht mehr als 25 °C vor. Diese Ausgestaltung der Erfindung weist insbesondere eine Wärmepumpe auf, die für einen Betrieb bei dieser Eingangstemperatur ausgelegt ist und bei einer Ausgangstemperatur von ca. 50°C einen hohen Wirkungsgrad aufweist.

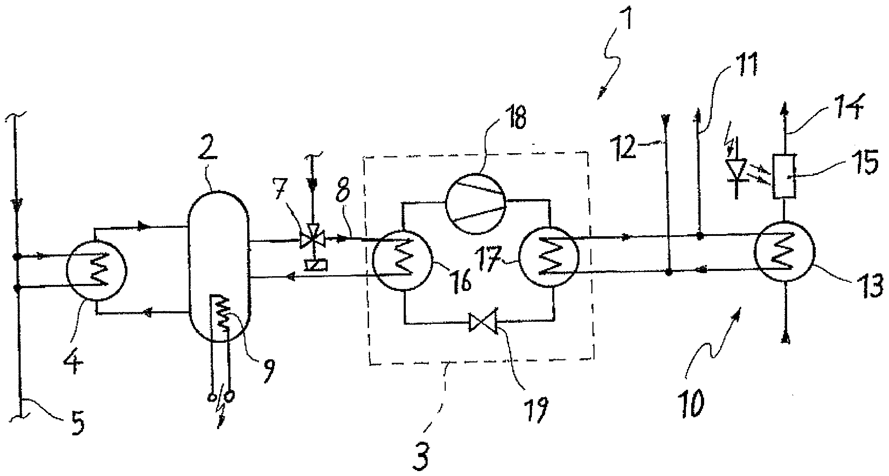

Die in der vorstehenden allgemeinen Beschreibung, der nachfolgenden Beschreibung eines Ausführungsbeispiels, den Ansprüchen und der Zeichnung offenbarten Merkmale können jeweils einzeln, zu mehreren in beliebiger Kombination oder alle in Ausführungen der Erfindung vorhanden sein. Möglich ist auch eine Ausführung der Erfindung, die nicht alle Merkmale des Anspruchs 1 umfasst. Die vorstehend erläuterten Ausführungen und Ausgestaltungen der Erfindung können beliebig kombiniert werden.

Die Erfindung wird nachfolgend anhand eines in der Zeichnung dargestellten Ausführungsbeispiels näher erläutert. Die einzige Figur zeigt ein Schaltbild einer erfindungsgemäßen Fernwärmeabnahmestation.

Die in der Zeichnung dargestellte, erfindungsgemäße Fernwärmeabnahmestation 1 weist einen Wärmespeicher 2 und eine Wärmepumpe 3 auf. Der Wärmespeicher 2 ist mit einem Wärmetauscher 4 an einen Rücklauf 5 eines im Übrigen nicht dargestellten Fernwärmenetzes angeschlossen. Der Rücklauf 5 kann allgemein auch als Fernwärmeleitung des Fernwärmenetzes aufgefasst werden. Vorzugsweise ist der Fernwärmeanschluss nahe einem letzten Wärmeverbraucher und fern einer Wärmequelle des Fernwärmenetzes vorgesehen. Das verringert einen Wärmeverlust der Rücklaufs 5 wegen der Wärmeentnahme der Fernwärmeabnahmestation 1, die eine Temperatur im Rücklauf senkt. Vorgesehen ist eine Absenkung einer Rücklauftemperatur um ca. 15 bis 20 °C.

In einem Zulauf 8 vom Wärmespeicher 2 zur Wärmepumpe 3 ist ein Mischer 7 zum Zumischen von Kaltwasser vorgesehen. Dadurch lässt sich eine Temperatur im Zulauf 8 zur Wärmepumpe 3 unabhängig von einer Temperatur im Wärmespeicher (Solespeicher) 2 auf unter 25°C begrenzen. Die Wärmepumpe 3 ist für diese Temperatur optimal ausgelegt und weist bei einer Temperatur von unter 25 °C, beispielsweise bei einer Temperatur zwischen 10 und 15 °C oder zwischen 15 und 20 °C ihren höchsten Wirkungsgrad auf. Gemeint ist hier die Temperatur auf einer Primärseite der Wärmepumpe 3, also an einem Zulauf 8 vom Wärmespeicher 2 zur Wärmepumpe 3. Möglich ist ein Betrieb der Fernwärmeabnahmestation 1 ab einer Temperatur im Wärmespeicher 2 von ca. 0 °C.

Der Wärmespeicher 2 weist eine elektrische Heizung 9 auf, die zum Erwärmen mit Strom vorgesehen ist, der übrig ist und anderweitig nicht gebraucht wird.

An die Wärmepumpe 3 ist eine Heiz- und Warmwasseranlage 10 beispielsweise eines Wohngebäudes angeschlossen. Die Heiz- und Warmwasseranlage 10 weist einen Heizkreis mit einem Vorlauf 11 und einem Rücklauf 12 und einen Wärmetauscher 13 zum Erwärmen von Brauchwasser, nämlich Trinkwasser, Dusch- und Badewasser, Waschwasser und allgemein Warmwasser für Bewohner des Wohngebäudes auf. In einer Warmwasserleitung 14, die vom Wärmetauscher 13 der Heiz- und Warmwasseranlage 10 zu nicht gezeichneten Entnahmestellen wie Wasserhähnen und Duschköpfen führt, ist ein UV Filter 15 zur Wasseraufbereitung, nämlich zur Entkeimung des warmen Wassers in der Warmwasserleitung 14 vorgesehen. Das UV-Filter 15 befindet sich auf einer Wärmeabgabeseite der Wärmepumpe 3.

Gezeichnet ist eine Wärmepumpe 3 mit zwei Wärmetauschern 16, 17, einem Verdichter 18 und einer Drossel 19. Einer der beiden Wärmetauscher 16, der an den Wärmespeicher 2 angeschlossen ist und der auch als primärer Wärmetauscher 16 der Wärmepumpe 3 bezeichnet werden kann, bildet einen Verdampfer. Der andere Wärmetauscher 17, an den die Heiz- und Warmwasseranlage 10 angeschlossen ist und der auch als sekundärer Wärmetauscher 17 der Wärmepumpe 3 bezeichnet werden kann, bildet einen Kondensator. Die Erfindung ist nicht auf die gezeichnete Wärmepumpe 3 beschränkt, sondern es sind andere Wärmepumpen möglich.

## Patentansprüche

1. Fernwärmeabnahmestation mit einem Wärmespeicher (2), der Wärme aus einer Fernwärmeleitung (5) eines Fernwärmenetzes erhält, **dadurch gekennzeichnet, dass** an den Wärmespeicher (2) eine Wärmepumpe (3) angeschlossen ist, die Wärme aus dem Wärmespeicher (2) erhält.

2. Fernwärmeabnahmestation nach Anspruch 1, **dadurch gekennzeichnet, dass** eine Heizanlage (10) und/oder eine Warmwasseranlage (10) an die Wärmepumpe (3) angeschlossen ist.

3. Fernwärmeabnahmestation nach Anspruch 1 oder 2, **dadurch gekennzeichnet, dass** die Fernwärmeabnahmestation (1) ein UV Filter (15) zur Wasseraufbereitung auf einer Wärmeabgabeseite der Wärmepumpe (3) aufweist.

4. Fernwärmeabnahmestation nach einem oder mehreren der Ansprüche 1 bis 3, **dadurch gekennzeichnet, dass** die Fernwärmeabnahmestation (1) über einen Wärmetauscher (4) an die Fernwärmeleitung (5) der Fernwärmenetzes angeschlossen ist.

5. Fernwärmeabnahmestation nach einem oder mehreren der vorhergehenden Ansprüche, **dadurch gekennzeichnet, dass** die Fernwärmeabnahmestation (1) einen Mischer (7) zum Zumischen von Kaltwasser aufweist.

6. Fernwärmeabnahmestation nach einem oder mehreren der vorhergehenden Ansprüche, **dadurch gekennzeichnet, dass** die Fernwärmeabnahmestation (1) eine elektrische Heizung (9) für den Wärmespeicher (2) aufweist.

7. Fernwärmeabnahmestation nach einem oder mehreren der vorhergehenden Ansprüche, **dadurch gekennzeichnet, dass** die Fernwärmeabnahmestation (1) an einen Rücklauf (5) des Fernwärmenetzes angeschlossen ist.

8. Fernwärmeabnahmestation nach einem oder mehreren der vorhergehenden Ansprüche, **dadurch gekennzeichnet, dass** der Wärmespeicher (2) eine Speichertemperatur von nicht mehr als 25°C aufweist.
